# EUROPÄISCHE PATENTSCHRIFT

(11) **EP 2 842 832 B1**
(45) Veröffentlichungstag und Bekanntmachung des Hinweises auf die Patenterteilung: **18.10.2017**
(21) Anmeldenummer: 14181630.6
(22) Anmeldetag: 20.08.2014
(51) Int. Cl.: B62D 1/16, F16J 15/52

(54) **Baugruppe zur Abdichtung eines Lenksäulendurchbruches**
Seal assembly for a steering column opening
Ensemble comportant joint d'étanchéité d'une perforation pour une colonne de direction

(30) Priorität: 22.08.2013 DE 102013014046
(43) Veröffentlichungstag der Anmeldung: 04.03.2015
(73) Patentinhaber: Henniges Automotive GmbH & Co. KG, 31547 Rehburg Loccum (DE)
(72) Erfinder: Lichtenberg, Wilhelm, 30655 Hannover (DE)
(74) Vertreter: Jabbusch, Matthias

(56) Entgegenhaltungen:
- EP-A1- 1 538 377
- DE-A1-102006 053 265
- JP-A- 2007 022 323
- JP-A- 2012 017 059

## Beschreibung

Die Erfindung betrifft eine Baugruppe zur Abdichtung des Lenksäulendurchbruches in einem zwischen Fahrgastzelle und Motorraum gelegenen Karosserieblech, bestehend aus wenigstens einem Lenksäulenaufnahmelager, wenigstens einem Karosserieblechflansch und wenigstens einer Elastomeraufhängung, über die das Lenksäulenaufnahmelager am Karosserieblechflansch aufgehängt ist.

Die Abdichtung dient regelmäßig dem Schutz des Motorraumes vor dem Eindringen von Spritzwasser und Verunreinigungen aus dem Inneren des Motorraumes heraus. Dabei gewährleistet das Lenksäulenaufnahmelager die drehbewegliche Aufnahme der Lenkspindel innerhalb des Lenksäulendurchbruches. Die Elastomeraufhängung gewährleistet hingegen eine radialbewegliche Aufnahme der Lenksäule innerhalb des Lenksäulendurchbruches. Außerdem dient die Elastomeraufhängung regelmäßig auch der akustischen Entkopplung einer im Lenksäulenaufnahmelager gehaltenen Lenkspindel von dem im Lenksäulendurchbruch gehaltenen Karosserieblechflansch.

Da die verschiedenen Fahrzeugmarken, deren Klassen, Typen und Serien eine Vielzahl verschieden ausgebildeter Fahrzeugkarosserien und Lenksäulen hervorbringen, ergibt sich eine ebenso große Anzahl von Lenksäuleneinbausituationen, denen durch die Anfertigung bauserienspezifischer Baugruppen Rechnung getragen wird. Zur Herstellung jeder weiteren bauserienspezifisch ausgebildeten Baugruppe erfordert es jedoch den kostenintensiven Bau weiterer Form- und Fügewerkzeuge, so dass die Herstellungskosten der bekannten Baugruppen nachteilig hoch liegen.
Das Dokument JP 2012 017059 A offenbart die Merkmale des Oberbegriffs des unabhängigen Anspruchs 1. Der Erfindung liegt die Aufgabe zugrunde, eine Baugruppe der eingangs genannten Gattung aufzuzeigen, deren Herstellungskosten verringert sind. Diese Aufgabe ist durch eine Baugruppe mit den Merkmalen des Patentanspruchs 1 gelöst. Vorteilhafte Weiterbildungen sind in den auf den Patentanspruch 1 rückbezogenen Unteransprüchen angegeben.

Die erfindungsgemäße Baugruppe zeichnet sich dadurch aus, dass der Karosserieblechflansch zu wenigstens einem bauserienspezifisch ausgebildeten Reduzierstück gehäuseartig erweitert ist, und dass die Elastomeraufhängung wenigstens teilweise als bauserienunabhängige Universalaufhängung ausgeführt ist.

Mit seiner bauserienspezifischen Ausbildung ist das Reduzierstück an die Lenksäulenbausituation einer einzigen oder zumindest weniger verschiedener Fahrzeugserien angepasst. In seiner Funktion als Karosserieblechflansch dient das Reduzierstück einer Reduktion des am Lenksäulendurchbruch bauserienübergreifend ausgebildeten Übermaßes auf ein bauserienspezifisch angepasstes Passmaß. Die gehäuseartige Erweiterung des Reduzierstückes ergibt sich dabei regelmäßig aus einer bauserienspezifischen Anpassung des Reduzierstückes an die bauserienunabhängig und damit universell ausgebildete Elastomeraufhängung. Diese ermöglicht vorteilhaft auch den Einsatz eines bauserienunabhängig ausgebildeten Lenksäulenaufnahmelagers, so dass zur Entwicklung weiterer Bauserien lediglich der Bau eines einfachen Formwerkzeuges für ein verändertes Reduzierstück erforderlich wird. Auf den Bau komplizierter Form- und Fügewerkzeuge für die Herstellung ganzer Baugruppen kann mit Vorteil verzichtet werden. Erfindungsgemäß sind mit der Elastomeraufhängung wenigstens zwei zwischen dem Reduzierstück und dem Lenksäulenaufnahmelager gelegene Dämpfungskammern ausgebildet. Diese stellen eine besonders wirksame Maßnahme zur Erzeugung von Interferenzen dar, mit denen vom Motorraum in die Dämpfungskammern übertragene Schallwellen einander gegenseitig auslöschen. Erfindungsgemäß ist die Elastomeraufhängung aus wenigstens zwei Faltenbalgmodulen zusammengesetzt. Der modulare Aufbau der Elastomeraufhängung ermöglicht vorteilhaft eine einfache und deshalb kostengünstige bauserienspezifische Anpassung an eine veränderte Lenksäuleneinbausituation, da lediglich für das von der Veränderung betroffene Faltenbalgmodul der Bau eines neuen Formwerkzeuges erforderlich ist. Die von der veränderten Lenksäuleneinbausituation unbetroffenen Faltenbalgmodule können vorzugsweise auch in der die veränderte Lenksäuleneinbausituation bedienenden Baugruppe Verwendung finden. Außerdem ermöglicht der modulare Aufbau der Elastomeraufhängung eine besonders einfache und kostengünstige Ausbildung der zwischen dem Reduzierstück und dem Lenksäulenaufnahmelager gelegenen Dämpfungskammern, da auf teurere Formwerkzeuge zur Herstellung doppelwandiger Elastomeraufhängungen verzichtet werden kann.

Vorzugsweise ist wenigstens eines der Faltenbalgmodule als beidseitig zum Lenksäulenaufnahmelager hin abgedichtete und zwischenliegend zum Reduzierstück hin abgedichtete Axialmanschette ausgebildet. Durch die beidseitige Abdichtung der Axialmanschette zum Lenksäulenaufnahmelager ist eine erste vorzugsweise bauserienunabhängig ausgebildete Dämpfungskammer geschaffen, die über das Reduzierstück im Lenksäulendurchbruch eines Karosseriebleches lediglich mittelbar aufgehängt ist.

Das als Axialmanschette ausgebildete Faltenbalgmodul ist vorzugsweise ein Universalteil der als Universalaufhängung bauserienunabhängig ausgeführten Elastomeraufhängung. Dazu weist das als Axialmanschette ausgebildete Faltenbalgmodul vorzugsweise eine einfach herstellbare rotationssymmetrische Bauteilgeometrie auf. Grundsätzlich sind hier jedoch auch asymmetrische Bauteilgeometrien denkbar, wenn mit diesen eine verbesserte bauserienspezifische Anpassung des Reduzierstückes an verschiedene Lenksäuleneinbausituationen erreicht ist.

Nach einer nächsten Weiterbildung der Erfindung ist wenigstens eines der Faltenbalgmodule als innenseitig zum Lenksäulenaufnahmelager hin abgedichtete und außenseitig zum Reduzierstück hin abgedichtete Radialmanschette ausgebildet. Mit der Radialmanschette ist eine unmittelbar an der ersten Dämpfungskammer gelegene zweite jedoch bauserienspezifisch ausgebildete Dämpfungskammer hergestellt, die vorzugsweise bis an die mit einem Karosserieblech zusammenwirkenden Dichtflächen des Reduzierstückes reicht. Zur Befestigung der Radialmanschette am Reduzierstück weist die Radialmanschette mit dem Reduzierstück zusammenwirkende Klemm- oder Raststrukturen auf.

Da die Längsachsen von Lenksäulen die Öffnungsquerschnitte von Lenksäulendurchbrüchen regelmäßig in einem schiefen Winkel durchlaufen, weist das als Radialmanschette ausgebildete Faltenbalgmodul eine an eine bauserienspezifische Lenksäuleneinbausituation angepasste Winkelgeometrie auf. Grundsätzlich kann das als Radialmanschette ausgebildete Faltenbalgmodul jedoch auch bauserienunabhängig ausgebildet sein, da der modulare Aufbau der Elastomeraufhängung eine kostengünstige Fertigung von Faltenbalgmodulen begünstigt, deren elastische Verformungseigenschaften speziell für einen bauserienunabhängigen Einsatz konzipiert sind.

Ein Ausführungsbeispiel der Erfindung, aus dem sich weitere erfinderische Merkmale ergeben, ist in der Zeichnung darstellt. Es zeigen:
- Fig.1: eine Seitenansicht einer erfindungsgemäßen Baugruppe im Mittelschnitt; und
- Fig. 2: eine ungeschnittene Vorderansicht der Baugruppe gemäß Fig. 1.

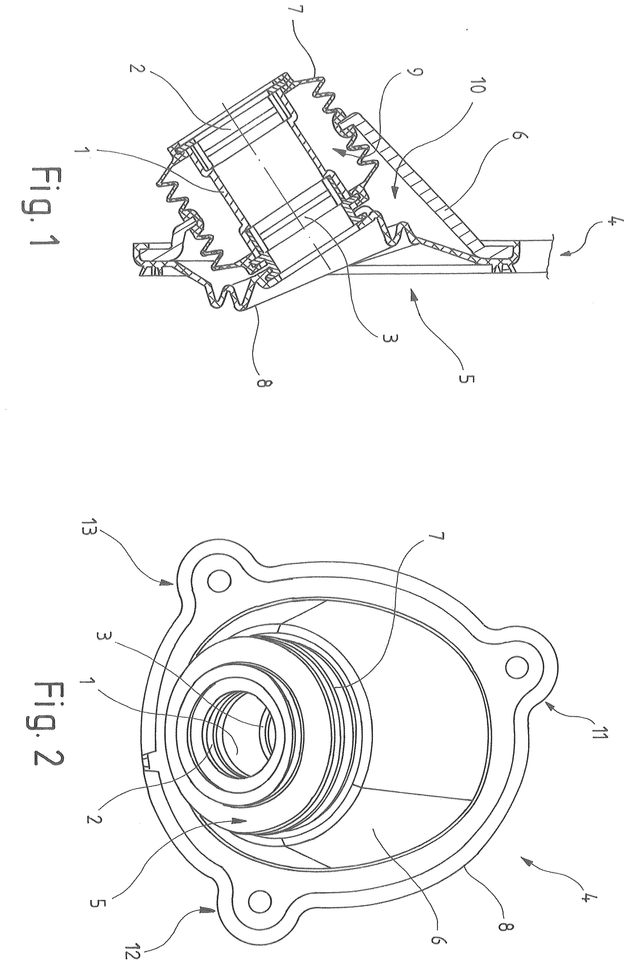

Die Fig. 1 zeigt die erfindungsgemäße Baugruppe zur Abdichtung eines Lenksäulendurchbruches in einem zwischen Fahrgastzelle und Motorraum gelegenen Karosserieblech. Die Baugruppe besteht aus einem Lenksäulenaufnahmelager 1 mit zwei Gleitbuchsen 2, 3, einem Karosserieblechflansch 4 und einer Elastomeraufhängung 5, über die das Lenksäulenaufnahmelager 1 am Karosserieblechflansch 4 aufgehängt ist. Der Karosserieblechflansch 4 ist zu einem bauserienspezifisch ausgebildeten Reduzierstück 6 gehäuseartig erweitert, so dass die Elastomeraufhängung 5 teilweise als bauserienunabhängige Universalaufhängung ausgeführt ist. Dazu ist die Elastomeraufhängung 5 aus zwei Faltenbalgmodulen 7, 8 zusammengesetzt, mit denen zwei im Ringspalt zwischen dem Reduzierstück 6 und dem Lenksäulenaufnahmelager 1 hintereinander gelegene Dämpfungskammern 9, 10 ausgebildet sind. Während das Faltenbalgmodul 7 als beidseitig zum Lenksäulenaufnahmelager 1 hin abgedichtete und zwischenliegend zum Reduzierstück 6 hin abgedichtete Axialmanschette ausgebildet ist, ist das andere Faltenbalgmodul 8 als innenseitig zum Lenksäulenaufnahmelager 1 hin abgedichtete und außenseitig zum Reduzierstück 6 hin abgedichtete Radialmanschette ausgebildet. Das als Axialmanschette ausgebildete Faltenbalgmodul 7 ist als Universalteil der bauserienunabhängig ausgebildeten Elastomeraufhängung 5 ausgeführt und weist eine einfache rotationssymmetrische Bauteilgeometrie auf. Das als Radialmanschette ausgebildete Faltenbalgmodul weist hingegen eine an eine bauserienspezifische Lenksäuleneinbausituation angepasste Winkelgeometrie auf. Eine derartige Winkelgeometrie weist auch das bauserienspezifisch ausgebildete Reduzierstück 6 auf.

Die Fig. 2 zeigt eine ungeschnittene Vorderansicht der in Fig. 1 dargestellten Baugruppe. Diese Ansicht lässt erkennen, dass der zu dem bauserienspezifisch ausgebildeten Reduzierstück 6 gehäuseartig erweiterte Karosserieblechflansch 4 drei Befestigungslaschen 11, 12, 13 zur sicheren Montage der erfindungsgemäßen Baugruppe an einem Lenksäulendurchbruch eines Karosseriebleches aufweist. Gleiche Bauteile sind mit gleichen Bezugszahlen versehen.

Alle in der vorstehenden Beschreibung und in den Ansprüchen genannten Merkmale sind in einer beliebigen Auswahl mit den Merkmalen des unabhängigen Anspruchs kombinierbar. Die Offenbarung der Erfindung ist somit nicht auf die beschriebenen bzw. beanspruchten Merkmalskombinationen beschränkt, vielmehr sind alle im Rahmen der Erfindung sinnvollen Merkmalskombinationen als offenbart zu betrachten.

## Patentansprüche

1. Baugruppe zur Abdichtung des Lenksäulendurchbruches in einem zwischen Fahrgastzelle und Motorraum gelegenen Karosserieblech, bestehend aus wenigstens einem Lenksäulenaufnahmelager, wenigstens einem Karosserieblechflansch, der zu wenigstens einem bauserienspezifisch ausgebildeten Reduzierstück gehäuseartig erweitert ist, und wenigstens einer wenigstens teilweise als bauserienunabhängige Universalaufhängung ausgeführten Elastomeraufhängung, über die das Lenksäulenaufnahmelager am Karosserieblechflansch aufgehängt ist, wobei die Elastomeraufhängung aus wenigstens zwei Faltenbalgmodulen zusammengesetzt ist,
**dadurch gekennzeichnet,**
**dass** mit der Elastomeraufhängung (5) wenigstens zwei zwischen dem Reduzierstück (6) und dem Lenksäulenaufnahmelager (1) gelegene Dämpfungskammern (9, 10) ausgebildet sind.

2. Baugruppe nach Anspruch 1, **dadurch gekennzeichnet, dass** wenigstens eines der Faltenbalgmodule (7, 8) als beidseitig zum Lenksäulenaufnahmelager (1) hin und zwischenliegend zum Reduzierstück (6) hin abgedichtete Axialmanschette ausgebildet ist.

3. Baugruppe nach Anspruch 2, **dadurch gekennzeichnet, dass** wenigstens das als Axialmanschette ausgebildete Faltenbalgmodul (7) als ein Universalteil der bauserienunabhängigen Universalaufhängung ausgeführt ist.

4. Baugruppe nach Anspruch 2 oder 3, **dadurch gekennzeichnet, dass** das als Axialmanschette ausgebildete Faltenbalgmodul (7) eine rotationssymmetrische Bauteilgeometrie aufweist.

5. Baugruppe nach einem der Ansprüche 1 bis 4, **dadurch gekennzeichnet, dass** wenigstens eines der Faltenbalgmodule (7, 8) als innenseitig zum Lenksäulenaufnahmelager (1) hin und außenseitig zum Reduzierstück (6) hin abgedichtete Radialmanschette ausgebildet ist.

6. Baugruppe nach Anspruch 5, **dadurch gekennzeichnet, dass** das als Radialmanschette ausgebildete Faltenbalgmodul (8) eine an eine bauserienspezifische Lenksäuleneinbausituation angepasste Winkelgeometrie aufweist.

## Claims

1. An assembly for sealing the steering column opening in a bodywork panel between the passenger compartment and engine compartment, comprising at least one steering column seating mount, at least one bodywork panel flange that is expanded in a housing-like manner to form at least one reducer that has been designed in a series-specific manner, and at least one elastomer suspension that is at least partially designed as a universal suspension that is independent to the series, via which the steering column mounting bearing is suspended on the bodywork panel flange, whereby the elastomer suspension is composed of at least two bellow modules,
wherein
at least two damping chambers (9, 10) positioned between the reducer (6) and the steering column seating mount (1) are formed with the elastomer suspension (5).

2. The assembly according to claim 1, wherein at least one of the bellow modules (7, 8) is designed as a axial sleeve that is sealed on both sides toward the steering column mounting bearing (1) and toward the reducer (6) intermediately.

3. The assembly according to claim 2, wherein at least the bellow module (7) designed in the form of an axial sleeve is constructed to be a universal part of the series-independent universal suspension.

4. The assembly according to claim 2 or 3, wherein the bellow module (7) designed in the form of an axial sleeve has a rotation-symmetrical component geometry.

5. The assembly according to one of the claims 1 to 4, wherein least one of the bellow modules (7, 8) is designed as radial sleeve that is sealed toward the steering column mounting bearing (1) on the inside and toward the reducer (6) on the outside.

6. The assembly according to claim 5, wherein the bellow module (8) designed in the form of an axial sleeve has an angle geometry that is adapted to the series-specific steering column assembly situation.

## Revendications

1. Ensemble comportant joint d'étanchéité d'une perforation pour une colonne de direction dans une tôle de carrosserie disposée entre la cellule-habitacle et le compartiment moteur , composé d'au moins un palier de logement de colonne de direction, d'au moins une bride de tôle de carrosserie qui est élargie en forme de boîtier vers au moins une pièce de réduction configurée de manière spécifique à la série de construction et au moins d'une suspension en élastomère exécutée au moins en partie comme une suspension universelle en fonction de la série de construction, sur laquelle le palier de logement de colonne de direction sur la bride de tôle de carrosserie est suspendu, la suspension en élastomère étant composée d'au moins deux modules à soufflet,
**caractérisé en ce**
**qu'**au moins deux chambres d'amortissement (9, 10) disposées entre la pièce de réduction (6) et le palier de logement de colonne de direction (1) sont configurés avec la suspension en élastomère (5).

2. Ensemble selon la revendication 1, **caractérisé en ce qu'**au moins un des modules à soufflet (7, 8) est configuré comme manchon axial étanchéifié des deux côtés vers le palier de logement de colonne de direction (1) et entre les deux vers la pièce de réduction (6).

3. Ensemble selon la revendication 2, **caractérisé en ce qu'**au moins le module à soufflet (7) configuré comme manchon axial est exécuté comme une pièce universelle de la suspension universelle en fonction de la série de construction.

4. Ensemble selon la revendication 2 ou 3, **caractérisé en ce que** le module à soufflet (7) configuré comme manchon axial présente une géométrie de composant symétrique en rotation.

5. Ensemble selon l'une quelconque des revendications 1 à 4, **caractérisé en ce qu'**au moins un des modules à soufflet (7, 8) est configuré comme manchon radial étanchéifié côté intérieur vers le palier de logement de colonne de direction (1) et côté extérieur vers la pièce de réduction (6).

6. Ensemble selon la revendication 5, **caractérisé en ce que** le module à soufflet (8) configuré comme manchon radial présente une géométrie angulaire adaptée à une situation de montage de colonne de direction spécifique à la série de construction.
